# EUROPÄISCHE PATENTANMELDUNG

(11) **EP 2 730 735 A1**
(43) Veröffentlichungstag der Anmeldung: **14.05.2014**
(21) Anmeldenummer: 14153782.9
(22) Anmeldetag: 16.04.2010
(51) Int. Cl.: E05F 5/10, F16F 9/34, F16F 9/516

(54) **Dämpfer für Möbel**

(30) Priorität: 28.04.2009 DE 202009004752 U
(62) Teilanmeldung aus: 10718917.7
(71) Anmelder: Druck- und Spritzgußwerk Hettich GmbH & Co. KG, 35066 Frankenberg (DE)
(72) Erfinder: Weber, Konrad, 35085 Ebsdorfergrund (DE)
(74) Vertreter: Dantz, Jan Henning

(57) **Zusammenfassung**

Dämpfer (1, 1') für Möbel, insbesondere für Scharniere, mit einem Gehäuse (2, 2'), in dem ein mit einer Kolbenstange (3, 3') verbundener Kolben (8, 8') verschiebbar aufgenommen ist, wobei ein Fluid bei einer Bewegung des Kolbens (8, 8') innerhalb des Gehäuses (2, 2') durch mindesten einen Strömungskanal (11, 11') am oder im Kolben (8, 8') strömt, wobei bei Bewegung des Kolbens (8, 8') in unterschiedliche Richtungen eine unterschiedliche Dämpfungskraft erhalten wird und der Querschnitt des Strömungskanals an mindestens einer Nut (20, 20') bereichsweise veränderbar ist, indem relativ zum Kolben (8, 8') eine Platte (12, 12') bewegbar ist, wobei an der mindestens einen Nut (20, 20') zur Vermeidung von Kavitation ein im Wesentlichen trichterförmiger Auslauf (22, 22') und/oder die Nut (20') einen zur radialen Richtung winklig angeordneten Abschnitt aufweist.

## Beschreibung

Die vorliegende Erfindung betrifft einen Dämpfer für Möbel, insbesondere für Scharniere, nach dem Oberbegriff des Anspruches 1.

Die US 4,438,833 offenbart einen Dämpfer mit einem in einem Gehäuse bewegbar angeordneten Kolben, in dem ein axialer Strömungskanal ausgebildet ist, an den sich ein Strömungskanal an einer Stirnseite des Kolbens anschließt. Der axiale Strömungskanal ist auf einer Seite durch eine Platte verschlossen, so dass an der Stirnseite des Kolbens ein Drosselspalt ausgebildet ist, wenn eine Kolbenstange aus dem Gehäuse herausgezogen wird. Beim Einschieben der Kolbenstange wird ein Dichtring am äußeren Umfang des Kolbens verschoben, so dass ergänzend zu dem Strömungsweg an der Stirnseite des Kolbens ein Strömungsweg am äußeren Umfang des Kolbens geöffnet wird, und die Kolbenstange leichtgängig in das Gehäuse eingeschoben werden kann.

Aus der WO 2007/099100 ist ein Dämpfer für Möbel bekannt, bei dem ein Kolben in einem zylindrischen Gehäuse verschiebbar ist. Das Gehäuse ist mit einem Fluid befüllt, damit bei einer Bewegung des Kolbens eine Dämpfung einer Bewegung erfolgt, wobei die Dämpfungskräfte je nach Bewegungsrichtung des Kolbens unterschiedlich sind. Hierfür ist eine relativ zu dem Kolben bewegliche Platte vorgesehen, mittels der der Querschnitt eines Strömungskanals an einer Nut veränderbar ist.

Ein solcher Dämpfer hat sich an sich bewährt, allerdings ist die Strömungsgeschwindigkeit des Fluids in dem Strömungskanal sehr hoch. Gerade bei schnellen Bewegungen eines Möbelteils können hohe Spitzenbelastungen auf den Dämpfer einwirken. Dadurch kann es aufgrund erheblicher Druckunterschiede zur Kavitation im Dämpfer kommen.

Es ist daher Aufgabe der vorliegenden Erfindung, einen Dämpfer für Möbel zu schaffen, bei dem auch hohe Spitzenbelastungen ohne die Gefahr von Kavitation aufgenommen werden können.

Diese Aufgabe wird mit einem Dämpfer mit den Merkmalen des Anspruches 1 gelöst.

Erfindungsgemäß weist die Nut zur Vermeidung von Kavitation einen in radialer Richtung winklig angeordneten Abschnitt auf.

Durch den trichterförmigen Auslauf kann im Bereich des Übergangs zwischen der Nut und einem Strömungskanal in axialer Richtung ein trichterförmiger Übergang geschaffen werden, so dass die Strömungsgeschwindigkeit nicht abrupt verringert wird, sondern in diesem Übergangsbereich durch eine Querschnittserweiterung allmählich verringert wird. Dieser trichterförmige Übergang bewirkt, dass das Fluid nicht schlagartig, sondern mit einem sanften Übergang in den Strömungskanal in axialer Richtung des Kolbes einströmt. Dies verbessert die Geschwindigkeits- und Druckverhältnisse zur Vermeidung von Kavitation. Zudem ist es möglich, die Nut mit einem zur radialen Richtung winklig angeordneten Abschnitt zu versehen. Dadurch wird die Nut verglichen mit einer rein radialen Erstreckung verlängert, so dass die Drosselwirkung der Nut sich auf eine längere Wegstrecke verteilt und die Nut somit im Querschnitt größer ausgebildet sein kann. Auch diese Maßnahme verringert die Neigung zur Kavitation, da aufgrund des größeren Querschnitts der Nut auch etwas geringere Strömungsgeschwindigkeiten erreicht werden.

In einer bevorzugten Ausgestaltung der Erfindung weist die Nut einen gebogenen Abschnitt auf. Die Nut kann dabei wellen- oder spiralförmig ausgebildet sein. Durch diese Maßnahme wird die Nut verglichen mit einer rein radialen Erstreckung verlängert, so dass die Drosselwirkung der Nut sich auf eine längere Wegstrecke verteilt und die Nut somit im Querschnitt größer ausgebildet sein kann. Die Nut kann dabei eine Länge von mindestens 0,5 bis 15 mm aufweisen, was verglichen mit dem üblichen Durchmesser eines Kolbens relativ lang ist.

In einer weiteren Ausgestaltung weist der trichterförmige Auslauf abgerundete Übergänge auf. Dadurch ist der trichterförmige Auslauf trompetenförmig ausgebildet, so dass ein besonders sanfter Übergang aus dem Drosselspalt der Nut erfolgt. Der trichterförmige Auslauf ist dabei vorzugsweise benachbart zu einem axialen Strömungskanal des Kolbens angeordnet, denn die Kavitation tritt insbesondere am Übergang zwischen dem Drosselspalt und dem axialen Strömungskanal auf.

Der Dämpfer kann dabei sowohl als Druck- als auch als Zugdämpfer ausgestaltet sein. Es sind jedoch die Druckdämpfer, die auf Grund der Gestaltung belastbarer sind.

Die Erfindung wird nachfolgend anhand zweier Ausführungsbeispiele mit Bezug auf die beigefügten Zeichnungen näher erläutert. Es zeigen:
- Figur 1: eine perspektivische Ansicht eines erfindungsgemäßen Dämpfers;
- Figur 2: eine Ansicht des Dämpfers der Figur 1 mit geschnittenem Gehäuse;
- Figur 3: eine Explosionsdarstellung des Dämpfers der Figur 1;
- Figur 4: eine Seitenansicht des Dämpfers der Figur 1 im Schnitt;
- Figuren 5 und 6: zwei vergrößerte Darstellungen des Kolbens des Dämpfers der Figur 1;
- Figur 7: eine perspektivische Ansicht eines zweiten Ausführungsbeispieles eines erfindungsgemäßen Dämpfers;
- Figuren 8 und 9: zwei Ansichten des Dämpfers der Figur 7 mit geschnittenem Gehäuse, und
- Figur 10: eine perspektivische Detailansicht des Kolbens des Dämpfers der Figur 7.

Ein Dämpfer 1, insbesondere für Möbel, umfasst ein im Wesentlichen zylinderförmiges Gehäuse 2, aus dem eine Kolbenstange 3 herausragt. An der Kolbenstange 3 ist endseitig ein Verbindungselement 4 mit einer senkrecht zur Axialrichtung angeordneten Durchgangsöffnung 5 ausgebildet, an der ein Bolzen, beispielsweise eines Scharniers, koppelbar ist. An der gegenüberliegenden Seite ist an dem Gehäuse 2 ebenfalls eine senkrecht zur Längsrichtung erstreckende Durchgangsöffnung 6 zur Verbindung mit dem Scharnier ausgebildet.

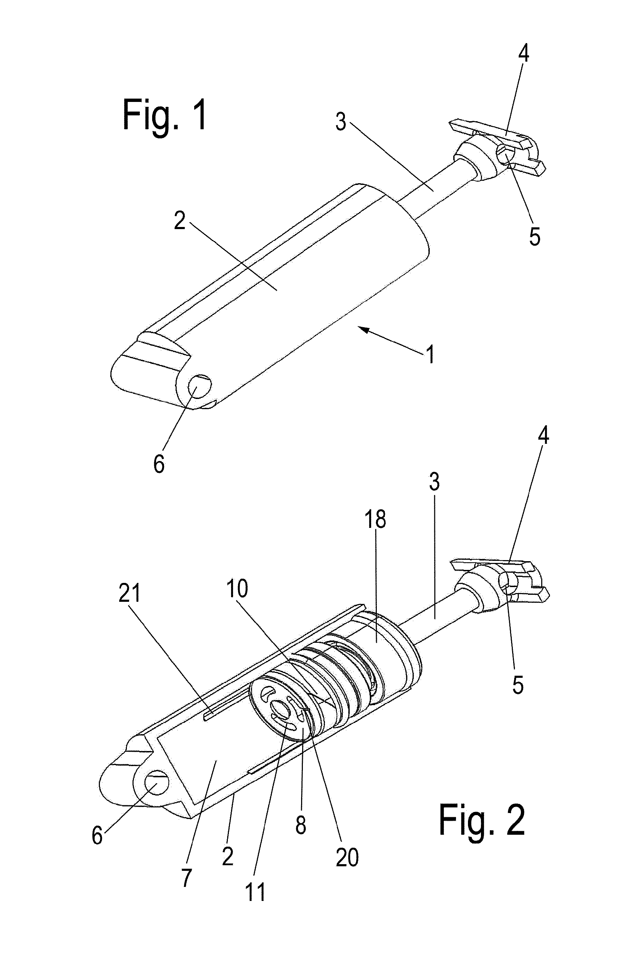

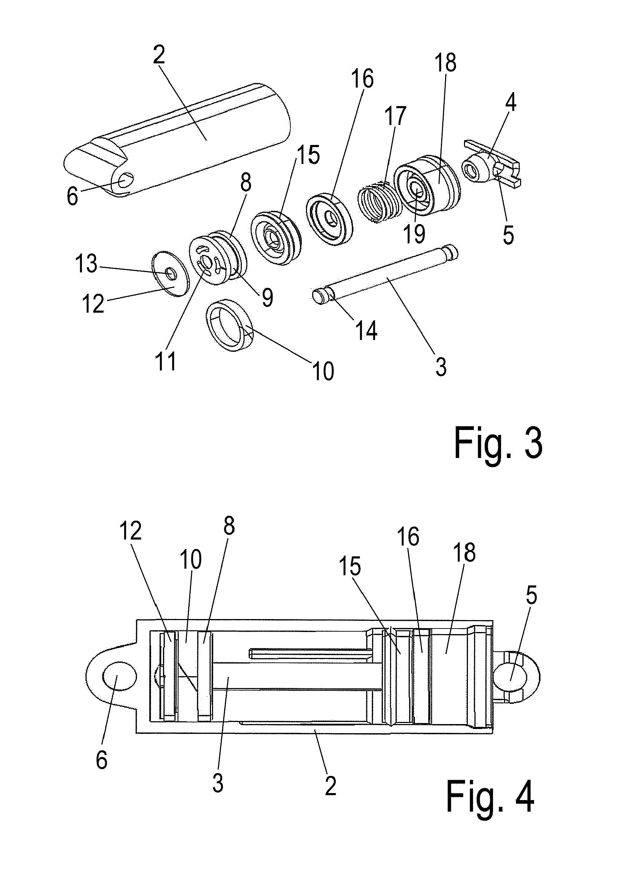

Wie in den Figuren 2 und 3 gezeigt ist, ist in einem Innenraum 7 des Gehäuses 2 ein in Axialrichtung verschiebbarer Kolben 8 angeordnet. Der Kolben 8 weist eine ringförmige Nut 9 für einen Dichtring 10 auf, der den Kolben 8 an einer Innenwand des Gehäuses 2 entlangführt und abdichtet. In dem Kolben 8 sind mehrere in Axialrichtung erstreckende Durchgangsöffnungen 11 mit länglichem gebogenem Querschnitt ausgebildet, die von einem Fluid durchströmbar sind. An mindestens einer dieser Durchgangsöffnungen 11 ist ein radialer Kanal 20 ausgebildet. Der Kolben 8 ist endseitig durch eine Platte 12 verschlossen, die die Durchgangsöffnungen 11 abdeckt, wenn die Platte 12 auf dem Kolben 8 aufliegt. Dies ist im dargelegten Ausführungsbeispiel der Fall, in dem sich der Kolben 8 in den Zylinder hinein bewegt, wobei der Dämpfer als Druckdämpfer ausgebildet ist. Es ist natürlich umgekehrt auch möglich, den Dämpfer als Zugdämpfer auszubilden.

Die Platte 12 ist aus einem elastischen Material gebildet und weist eine mittige Öffnung 13 auf. Die Platte 12 ist an der Öffnung 13 am Kolben 8 festgelegt. Bei einer Bewegung des Kolbens 8 kann die Platte 12 wahlweise von dem Kolben 8 weggebogen oder auf diesen gedrückt werden, so dass abhängig von der Position der Platte 12 die Durchgangsöffnungen 11 ganz oder nur teilweise verschlossen sind. Sind die Durchgangsöffnungen 11 durch die Platte 12 verschlossen, strömt das Fluid lediglich durch die radiale Nut 20. Die Platte 12 kann statt einer elastischen Ausgestaltung auch verschiebbar am Kolben 8 sein. Der Kolben 8 ist an dem Ende der Kolbenstange 3 an einer Nut 14 befestigt. Die Platte 12 ist mit Schraube 3 an der Kolbenstirnseite angeschraubt oder die Platte 12 ist mit der Kolbenstirnseite verprägt. Entscheidend ist dabei, dass die bewegliche Platte 12 zur Dämpfung auf den Kolben 8 und somit auf die Nut zur Drosselwirkung des Fluids gepresst wird.

Um bei einer Bewegung des Kolbens 8 einen Volumenausgleich vornehmen zu können, ist an der offenen Seite des Gehäuses 2 an einem Deckel 18 ein Ausgleichselement mit einer Dichtscheibe 15, die an einem Ring 16 angeordnet ist, der an einer Seite einer Feder 17 anliegt. Das gegenüberliegende Ende der Feder 17 ist an einer ringförmigen Aufnahme des Deckels 18 abgestützt, durch die eine Öffnung 19 zur Durchführung der Kolbenstange 3 ausgebildet ist.

In Figur 4 ist eine endseitige Position des Kolbens 8 in dem Gehäuse 2 dargestellt. Die Kolbenstange 3 ist in das Gehäuse 2 des Dämpfers eingefahren und kann nun herausgezogen werden, wobei sich der Kolben 8 nach rechts bewegt und das Fluid durch die Durchgangsöffnungen 11 strömt. In diese Richtung wird nur eine geringe Dämpfungskraft erzeugt, da sich die Platte 12 elastisch aufbiegt oder geringfügig verschoben wird, so dass der Strömungsquerschnitt an oder in dem Kolben 8 für das Fluid relativ groß bleibt. Bei einer Bewegung in die gegenüberliegende Richtung wird jedoch die Platte 12 auf die Durchgangsöffnungen 11 gedrückt, so dass das Fluid nur noch durch die radiale Nut 20 in eine der Durchgangsöffnungen 11 strömen kann.

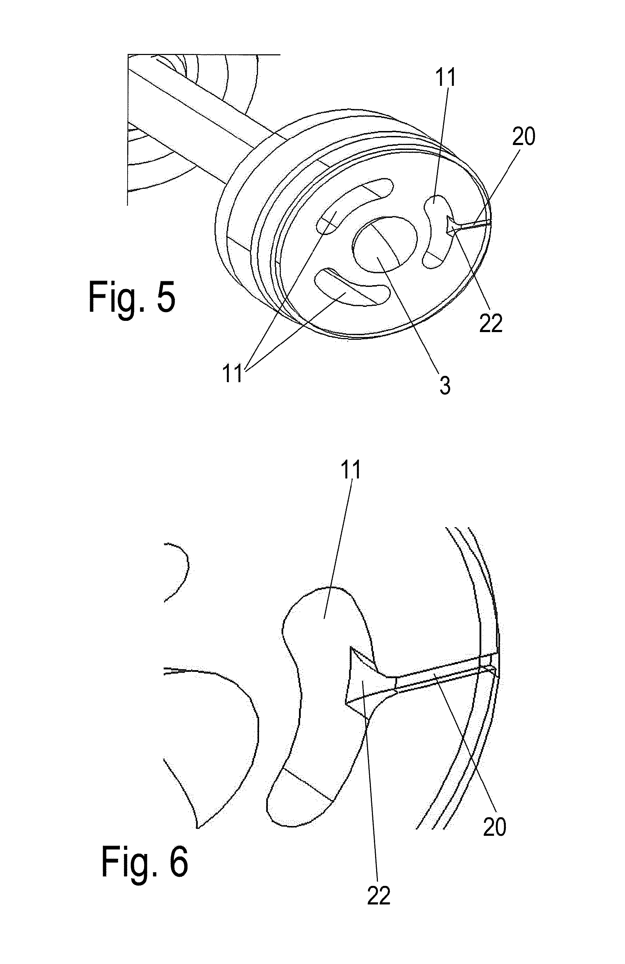

In den Figuren 5 und 6 ist die äußere Stirnseite des Kolbens 8 vergrößert dargestellt, an der die Durchgangsöffnungen 11 und die radiale Nut 20 zu erkennen sind. Die radiale Nut 20 ist an dem Übergang zur Durchgangsöffnung 11 mit einem trichterförmigen Auslauf 22 versehen, der zur Durchgangsöffnung 11 hin gerundet ausgebildet ist und somit trompetenartig verläuft. Der Krümmungsradius im Bereich des Übergangs zwischen der Nut 20 und den axialen Durchgangsöffnungen 11 kann in dem Bereich zwischen 0,3 bis 2 mm liegen.

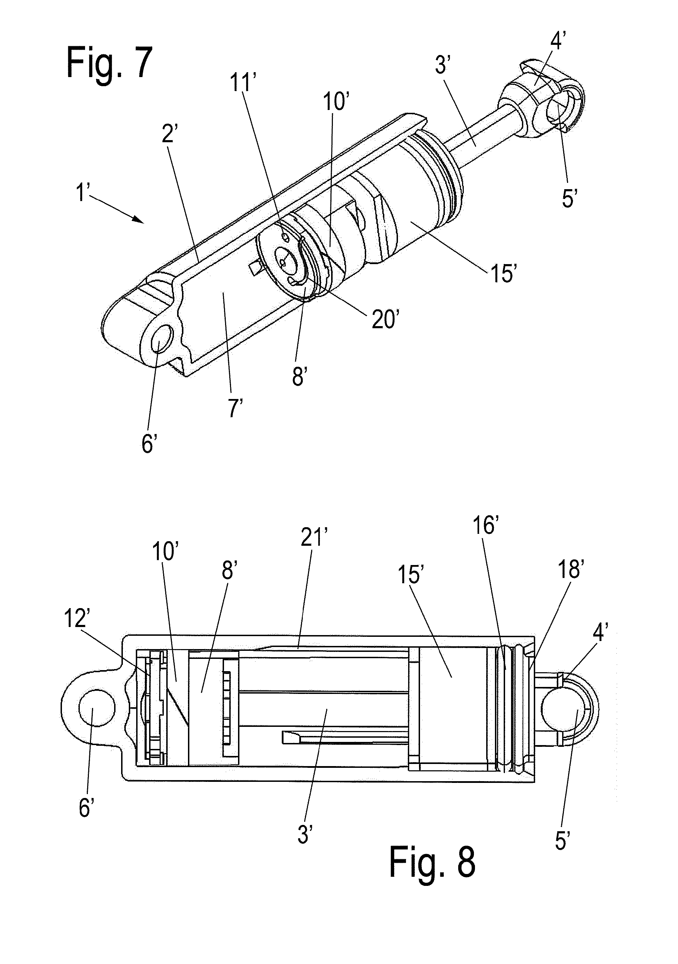

In den Figuren 7 bis 10 ist eine zweite Ausführungsform eines erfindungsgemäßen Dämpfers 1' dargestellt, der ein zylinderförmiges Gehäuse 2' aufweist, in dem eine Kolbenstange 3' mit einem Kolben 8' verschiebbar gelagert ist. Die Kolbenstange 3' ragt aus dem Gehäuse 2' mit einem Endabschnitt heraus, an dem ein Verbindungselement 4' mit einer Durchgangsöffnung 5' ausgebildet ist. An der gegenüberliegenden Seite ist an dem Gehäuse 2' ebenfalls eine Öffnung 6' zur Verbindung mit einem weiteren Bauteil vorgesehen.

Der Dämpfer 1' umfasst wie bei dem vorangegangenen Ausführungsbeispiel einen mit einem Fluid befüllten Innenraum 7', das zur Dämpfung eingesetzt wird. Der Kolben 8' weist an seinem äußeren Umfang einen Dichtring 10' auf und besitzt zwei kreisförmige Durchgangsöffnungen 11', wobei sich von einer Durchgangsöffnung 11' eine Nut 20' an einer Stirnseite des Kolbens 8' erstreckt.

In dem Gehäuse 2' ist auf der offenen Seite ein Deckel 18' vorgesehen, an dem für einen Volumenausgleich ein Ausgleichselement mit einem Dichtelement 16' angeordnet ist, an dem ein komprimierbares Element, beispielsweise einen federbeaufschlagten Ausgleichskolben oder ein elastisch- kompressibles Element vorgesehen ist. Es ist auch möglich, andere elastische Elemente vorzusehen.

An einer Innenwand des Gehäuses 2' sind ein oder mehrere in Axialrichtung verlaufende Nuten 21' ausgebildet, die in diesem Bereich eine Verbindung zwischen den beiden durch den Kolben 8' getrennten Kammern ermöglichen. Die Nuten 21' enden jedoch vor einem Endabschnitt des Kolbens 8', so dass beim Einschieben des Kolbens 8 erst in diesem Endabschnitt des Kolbens 8 ein entsprechender Druck aufgebaut werden kann, der dann nur noch über den Drosselspalt 20, 20' abgebaut werden kann

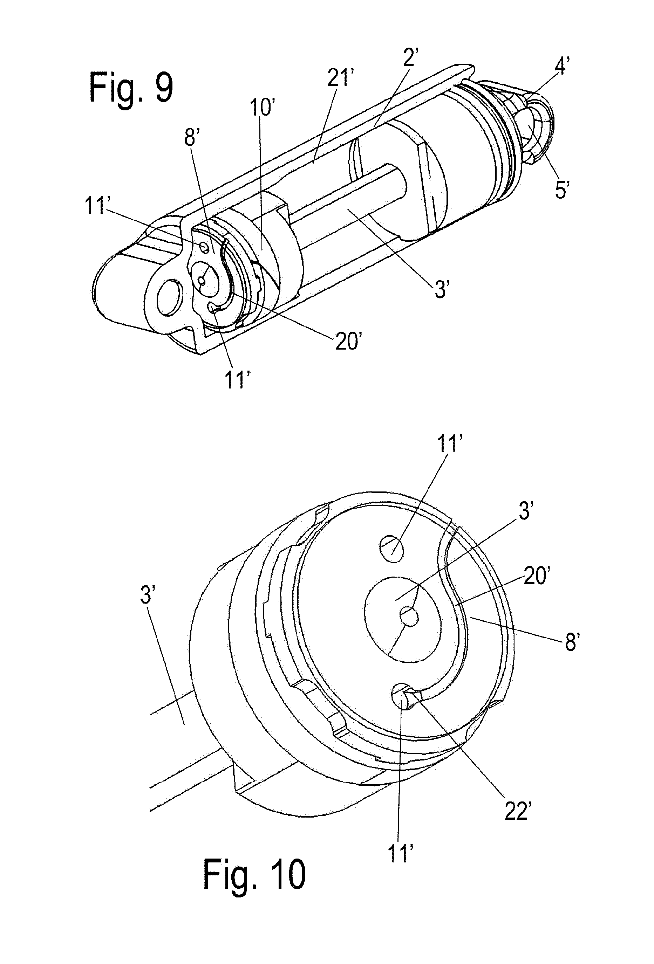

Wie in Figur 10 gezeigt ist, befindet sich zwischen der Durchgangsöffnung 11' in axialer Richtung und der senkrecht dazu angeordneten Nut 20' an der Stirnseite des Kolbens 8' ein trichterförmiger Übergang 22', der wie bei dem vorangegangenen Ausführungsbeispiel trompetenförmig gerundet ausgebildet ist. Zusätzlich erstreckt sich die Nut 20' nicht nur in radiale Richtung, sondern ist deutlich länger ausgebildet und verläuft wellenförmig an einer Stirnseite des Kolbens 8'. Die Nut 20' ist dabei um das Kolbenzentrum 3' herumgeführt, so dass die Länge der Nut 20' zwischen 5mm und 15mm betragen kann, was verglichen mit den vorbekannten Strömungskanälen eine deutliche Verlängerung ist. Die Nut 20' kann somit im Querschnitt größer ausgebildet sein, da die Drosselfunktion nicht nur auf einen kurzen Abschnitt beschränkt wird, sondern durch die weitaus längere Ausbildung sich über die gesamte Länge der Nut 20' verteilen kann. Auch andere Formen der Nut 20' sind möglich, insbesondere kann die Nut 20' gewindeartig um das Kolbenzentrum 3' geführt sein oder andere Krümmungen und Geometrien aufweisen.

## Patentansprüche

1. Dämpfer (1, 1') für Möbel, insbesondere für Scharniere, mit einem Gehäuse (2, 2'), in dem ein mit einer Kolbenstange (3, 3') verbundener Kolben (8, 8') verschiebbar aufgenommen ist, wobei ein Fluid bei einer Bewegung des Kolbens (8, 8') innerhalb des Gehäuses (2, 2') durch mindestens einen Strömungskanal (11, 11') am oder im Kolben (8, 8') strömt, wobei bei Bewegung des Kolbens (8, 8') in unterschiedliche Richtungen eine unterschiedliche Dämpfungskraft erhalten wird, **dadurch gekennzeichnet, dass** in dem Gehäuse (2, 2') auf der offenen Seite ein Deckel (18, 18') vorgesehen ist, an dem für einen Volumenausgleich ein Ausgleichselement mit einem Dichtelement (16, 16') angeordnet ist, und der Querschnitt des Strömungskanals an mindestens einer Nut (20, 20') bereichsweise veränderbar ist, indem relativ zum Kolben (8, 8') eine Platte (12, 12') bewegbar ist und zur Vermeidung von Kavitation die mindestens eine Nut (20') einen zur radialen Richtung winklig angeordneten Abschnitt aufweist.

2. Dämpfer nach Anspruch 1, **dadurch gekennzeichnet, dass** die Nut (20') einen gebogenen Abschnitt aufweist.

3. Dämpfer nach Anspruch 1 oder 2, **dadurch gekennzeichnet, dass** die Nut (20') wellen- oder spiralförmig ausgebildet ist.

4. Dämpfer nach einem der Ansprüche 1 bis 3, **dadurch gekennzeichnet, dass** die Nut (20') eine Länge von mindestens 5mm aufweist.

5. Dämpfer nach einem der Ansprüche 1 bis 4, **dadurch gekennzeichnet, dass** die Nut zur Vermeidung von Kavitation einen trichterförmigen Auslauf aufweist.

6. Dämpfer nach einem der Ansprüche 5, **dadurch gekennzeichnet, dass** der trichterförmige Auslauf (22, 22') abgerundete Übergänge aufweist.

7. Dämpfer nach einem der Ansprüche 5 oder 6, **dadurch gekennzeichnet, dass** der trichterförmige Auslauf (22, 22') benachbart zu einem axialen Strömungskanal (11, 11') an dem Kolben (8, 8') angeordnet ist.

8. Dämpfer nach einem der Ansprüche 1 bis 7, **dadurch gekennzeichnet, dass** das Ausgleichselement als ein komprimierbares Element, beispielsweise als ein federbeaufschlagter Ausgleichskolben oder ein elastischkompressibles Element vorgesehen ist.

9. Dämpfer nach einem der Ansprüche 1 bis 7, **dadurch gekennzeichnet, dass** an der offenen Seite des Gehäuses (2) an einem Deckel (18) ein Ausgleichselement mit einer Dichtscheibe (15), die an einem Ring (16) angeordnet ist, der an einer Seite einer Feder (17) anliegt, wobei ein gegenüberliegendes Ende der Feder (17) an einer ringförmigen Aufnahme des Deckels (18) abgestützt ist, durch die eine Öffnung (19) zur Durchführung der Kolbenstange (3) ausgebildet ist.

10. Dämpfer nach einem der Ansprüche 1 bis 9, **dadurch gekennzeichnet, dass** die Platte (12, 12') aus einem elastischen Material gebildet ist und bei einer Bewegung des Kolbens (8, 8') die Platte (12, 12') wahlweise von dem Kolben (8, 8') weggebogen oder auf diesen gedrückt wird.

11. Dämpfer nach einem der Ansprüche 1 bis 10, **dadurch gekennzeichnet, dass** der Dämpfer als Druckdämpfer ausgebildet ist.
